# EUROPEAN PATENT SPECIFICATION

(11) **EP 2 910 295 B1**
(45) Date of publication and mention of the grant of the patent: **31.08.2016**
(21) Application number: 14156466.6
(22) Date of filing: 25.02.2014
(51) Int. Cl.: B01D 53/62, C01D 7/12, C01D 7/18

(54) **ARRANGEMENT AND PROCESS FOR INTEGRATED FLUE GAS TREATMENT AND SODA ASH PRODUCTION**
ANORDNUNG UND VERFAHREN ZUR INTEGRIERTEN RAUCHGASBEHANDLUNG UND NATRIUMCARBONATHERSTELLUNG
ARRANGEMENT ET PROCÉDÉ DE TRAITEMENT DE GAZ DE FUMÉE INTÉGRÉ ET PRODUCTION DE CARBONATE DE SODIUM

(43) Date of publication of application: 26.08.2015
(73) Proprietor: General Electric Technology GmbH, 5400 Baden (CH)
(72) Inventor: Stallmann, Olaf, 55270 Essenheim (DE); Weingaertner, Christoph, 55435 Gau-Algesheim (DE); Balfe, Michael Charles, 55131 Mainz (DE)
(74) Representative: General Electric Technology GmbH

(56) References cited:
- EP-A1- 2 174 699
- WO-A1-2007/139392
- WO-A1-2011/112069
- DE-A1-102007 015 082
- US-A- 2 189 826
- US-A1- 2013 216 467

## Description

### TECHNICAL FIELD

The present invention relates to an arrangement and process for integrated flue gas treatment and soda ash production.

### BACKGROUND

Soda ash (sodium carbonate Na₂CO₃) is used in many industrial processes; there is therefore a need to produce large amounts of soda ash. The most used process for soda ash production is currently the so called Solvay process. The Solvay process works according to the global reaction

2NaCl + CaCO₃ → Na₂CO₃ + CaCl₂.

Therefore in order to produce soda ash, NaCl, limestone CaCO₃ (to produce CaO according to the dissociation reaction CaCO₃ → CaO + CO₂; CaO is then used for soda ash production) and heat must be supplied for reaction. During the soda ash production also ammonia NH₃ is used as one of the reagents, but ammonia is regenerated at the end of the Solvay process, therefore supply of fresh ammonia is not needed or is needed only to a limited extent.

Flue gas treatment systems are often needed downstream of a combustion process such as a boiler of a large power plant or a furnace of an industrial installation in order to reduce emissions within limits imposed by law. Usually carbon dioxide CO₂ emissions must be controlled and flue gas treatment systems are often provided to capture carbon dioxide CO₂ contained in flue gas from a combustion process.

A number of different carbon dioxide capture systems exist. One of such carbon dioxide capture system is the so called carbonation-calcination loop. According to this system, flue gas is supplied into a carbonator wherein CO₂ contained in the flue gas combines with a metal oxide, usually CaO, to form a metal carbonate compound, such as CaCO₃. This process occurs at about 650 °C.

The metal carbonate compound such as CaCO₃ is forwarded into a calciner wherein the metal carbonate compound CaCO₃ is decomposed by heat at a temperature between 900-1050 °C into metal oxide such as CaO and carbon dioxide CO₂. The carbon dioxide can thus be removed and forwarded to further treatments and/or storage. CaO is recirculated into the carbonator.

The inventors have found a way to integrate the soda ash production by Solvay process and the flue gas treatment system.

### SUMMARY

An aspect of the disclosure includes providing an arrangement and process for integrated flue gas treatment and soda ash production that permit an increased global efficiency.

These and further aspects are attained by providing an arrangement and a process in accordance with the accompanying claims.

The lime CaO and heat that are needed at the soda ash production process are extracted from the flue gas treatment system. This allows the use of a byproduct from the flue gas treatment system as a reagent or heat source for the soda ash production process, such that fresh lime CaO or combustion of fuel specifically for use at the soda ash production process are not needed or are reduced.

### BRIEF DESCRIPTION OF THE DRAWINGS

Further characteristics and advantages will be more apparent from the description of a preferred but non-exclusive embodiment of the arrangement and process, illustrated by way of non-limiting example in the accompanying drawings, in which:

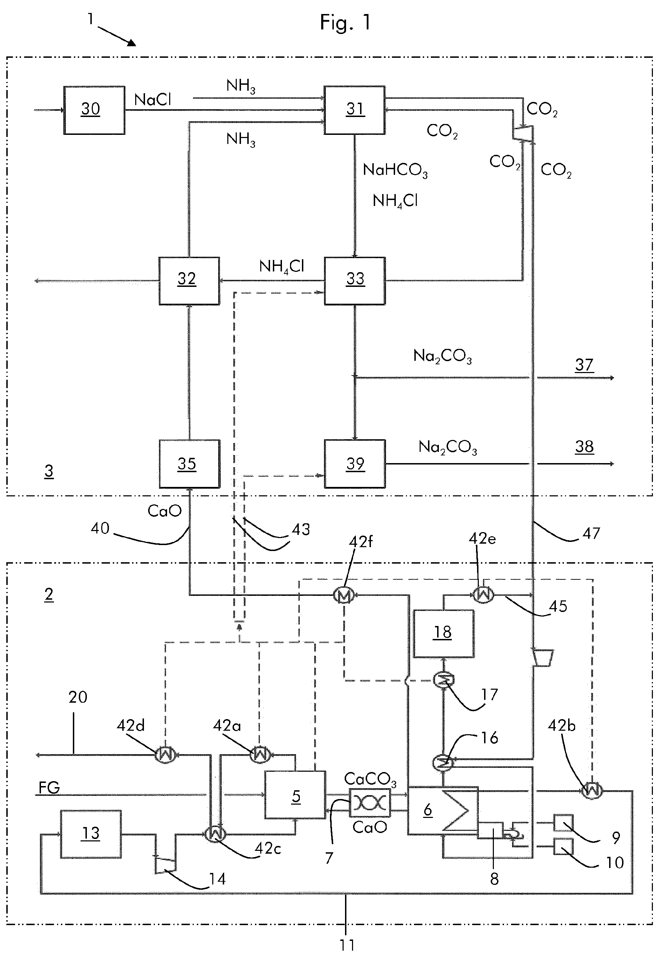

Figures 1 shows an example of an arrangement of the invention.

### DETAILED DESCRIPTION OF EXEMPLARY EMBODIMENTS

With reference to the figures, these show an arrangement 1 of a flue gas treatment system 2 by carbonation-calcination loop and soda ash production system 3 by Solvay process.

The flue gas treatment system comprises a carbonator 5 and a calciner 6.

The carbonator 5 receives flue gas FG from a combustion process and has carbon dioxide contained in the flue gas combined with CaO to generate a carbonated metal compound such as CaCO₃.

The reaction occurring at the carbonator is thus:

CO₂ + CaO → CaCO₃.

This reaction occurs at a temperature of about 600-650 °C.

The calciner 6 receives the carbonated metal compound CaCO₃ from the carbonator 5 and separates it by heat in carbon dioxide CO₂ and a metal oxide CaO.

The reaction occurring at the calciner 6 is thus:

CaCO₃ → CO₂ + CaO.

This reaction occurs at a temperature of about 900-1050 °C.

In addition, the flue gas treatment system 2 includes a heat exchanger 7 for transferring heat of the CaO, moving from the calciner 6 to the carbonator 5, to the CaCO₃, moving from the carbonator 5 to the calciner 6.

The calciner 6 is provided with a burner 8 that combusts a fuel from a source 9 with air or oxygen from a source 10; the calciner 6 is preferably an indirect heated calciner, i.e. the combustion products from the burner 8 do not mix with the CO₂ and other gas and products contained in the calciner 6. This allows use of high quality fuels as well as low quality fuels.
The calciner shown in the figure is an example of indirect heated calciner by means of indirect heat transfer via heat exchange surfaces. In other examples there can also be provided an indirect heated calciner by means of direct heat transfer via a heat transfer medium (e.g. a heat carrying inert solid). In addition, also direct calcination is possible, for example with oxygen firing (i.e. the fuel is combusted in presence of oxygen). The combustion products of the burner 8 are forwarded, via a line 11 and through a conditioning system 13 (such as a de-dusting unit and/or a desulphurization unit, etc.) and a fan 14, into the carbonator 5. The conditioning system 13 and fan 14 are anyhow not needed and can be used or not according to the needs.

The carbon dioxide CO₂ discharged from the calciner 6 is cooled in a first cooler 16 and then in a second cooler 17, it is then passed through a conditioning unit 18 and is recirculated back into the calciner 6.

The recirculated carbon dioxide CO₂ is used as the cooling medium for the carbon dioxide CO₂ released from the calciner 6 at the cooler 16; at the cooler 17 another fluid as the cooling medium for the carbon dioxide CO₂ is typically used, such as for example air or water or another thermo fluid from an external source.

The flue gas deprived of the carbon dioxide CO₂ is discharged from the carbonator 5 through a line 20.

The soda ash production system 3 comprises usually a reactor 30 for production of brine that can be used as the source of NaCl in the Solvay process; this reactor 30 is anyhow not mandatory and is used according to the design and needs.

The reactor 30 is connected to one or more first reactors 31 wherein the following reaction occurs:

NaCl + CO₂ + NH₃ + H₂O → NaHCO₃ + NH₄Cl.

This reaction is often in practice carried out in a plurality of steps, each of which can be carried out in different reactors.

The first reactor 31 is connected to a second and a third reactor 32, 33.

NH₄Cl is transferred into the second reactor 32 for example via the third reactor 33, and NaHCO₃ is transferred into the third reactor 33.

At the second reactor 32 the following reaction occurs:

2NH₄Cl + CaO → 2NH₃ + CaCl₂ + H₂O.

The CaO for this reaction is supplied from a slurry preparation step 35 that supplies lime milk into the second reactor 32. From the second reactor 32 NH₃ is forwarded into the first reactor 31.

At the third reactor 33 the following reaction occurs

2NaHCO₃ → Na₂CO₃ + H₂O + CO₂.

This reaction allows production of light soda ash 37 or dense soda ash 38 after a dense soda ash production step 39. It is clear that soda ash of any density can be produced and not only light and dense soda ash. For example also medium dense soda ash can be produced.

CaO and heat for use in the soda ash production system 3 are extracted from the flue gas treatment system 2.

In this respect, the arrangement 1 has a supply line 40 for CaO between the calciner 6 and the second reactor 32, via the slurry preparation step 35 that is for example implemented in a tank or reactor; the supply line 40 allows to supply CaO from the flue gas treatment system 2 to the soda ash production system 3.

In addition, the arrangement 1 also has one or more heat exchangers 42a-42f and one or more thermo fluid supply lines 43 between the heat exchangers 42a-f and at least the third reactor 33 and/or dense soda ash production step 39. The heat exchangers 42a-f and thermo fluid supply lines 43 allow to recover heat from the flue gas treatment system 2 and supply it to soda ash production system 3.

In addition, the heat available at one or more of the heat exchangers 42a-f can also be directly transferred to the third reactor 33 and/or dense soda ash production step 39; in this respect, for example at one or more of the heat exchangers 42a-f it is heated the process media used in the third reactor 33 and/or dense soda ash production step 39.

For example, one or more than one of the following solutions can be used:
- a heat exchanger 42a can be connected to the flue gas discharge line 20 of the carbonator 5;
- a heat exchanger 42b can be connected to the combustion products discharge line 11 of the calciner 6;
- an auxiliary heat exchanger 42c can be connected between the combustion products discharge line 11 of the calciner 6 downstream of the conditioning system 13 and the flue gas discharge line 20 of the carbonator 5, for heating the flue gas discharged from the carbonator 5, and a heat exchanger 42d is further connected to the flue gas discharge line 20 of the carbonator 5 downstream the auxiliary heat exchanger 42c;
- a heat exchanger 42e can be connected to a carbon dioxide discharge line 45 from the calciner 6;
- a heat exchanger 42f can be connected to the supply line 40 for CaO.

In addition, further integration of the flue gas treatment system 2 and soda ash production system 3 can be envisaged.

For example, carbon dioxide CO₂ for use in the soda ash production system 3 can be extracted from the flue gas treatment system 2.

In this respect, the arrangement 1 can have a carbon dioxide supply branch 47 between the calciner 6 (for example it can be connected to the line 45 that is in turn connected to the calciner 6) and the first reactor 31.

The operation of the arrangement is apparent from what described and illustrated and is substantially the following.

The temperature at the carbonator 5 is between 600-650 °C, the temperature at the calciner is between 900-1050 °C, the temperature at the third reactor 33 and preferably also at the dense soda ash production step is between 150-250 °C.

Flue gas FG is supplied into the carbonator 5 together with combustion products generated at the calciner 6.

At the carbonator, CO₂ contained in the flue gas and combustion products is combined with CaO forming CaCO₃.

Flue gas deprived from carbon dioxide CO₂ is released into the atmosphere via line 20; while passing through line 20 the flue gas is cooled in the heat exchanger 42a to transfer its heat to the thermo fluid; the flue gas is then heated in the auxiliary heat exchanger 42c by cooling the combustion products, to recover heat from the combustion products; the flue gas is then cooled again in the heat exchanger 42d to transfer its heat to the thermo fluid.

The thermo fluid is used to heat the third reactor 33 and/or the dense soda ash production step 39 and/or the other reactors and/or steps of the soda ash production system 3.

At the calciner 6 CaCO₃ is separated by heat into CaO and CO₂.

The CaO is partly supplied back into the carbonator 5 and partly is supplied to the second reactor 32, preferably but not necessarily via the slurry preparation step 35, for use in the soda ash production system 3.

Advantageously, since the CaO has a high temperature because it comes from the calciner 6, at the heat exchanger 42f the CaO is cooled to transfer its heat to a thermo fluid that is used to heat the third reactor 33 and/or the dense soda ash production step 39 and/or the other reactors and/or steps of the soda ash production system 3.

The combustion product generated at the calciner 6 are directed to the carbonator 5 via the line 11; these combustion products are cooled at the heat exchanger 42b to transfer their heat to a thermo fluid that is used to heat the third reactor 33 and/or the dense soda ash production step 39 and/or the other reactors and/or steps of the soda ash production system 3.

The carbon dioxide CO₂ from the calciner 6 passes through the heat exchanger 16, 17 and the conditioning unit 18 and it is then further cooled at the heat exchanger 42e.

At the heat exchanger 42e the carbon dioxide CO₂ is cooled to transfer its heat to a thermo fluid that is used to heat the third reactor 33 and/or the dense soda ash production step 39 and/or the other reactors and/or steps of the soda ash production system 3.

The heat exchanger 17 can be used to heat a thermo fluid to transfer heat to the soda ash production system 3 or alternatively it can use a cooling medium that is not used in the soda ash production system 3, for example in order to optimize carbon dioxide treatment at the conditioning unit 18 and efficiency of the calciner 6.

The carbon dioxide CO₂ from line 45 can be supplied partly to the first reactor 31 via the branch 47, partly back into the calciner 6, and partly can be captured or used in other ways.

Naturally the heat exchangers 42a-f (and the heat exchanger 17 when it is used to transmit heat from the flue gas treatment system 2 to the soda ash production system 3) can heat same or different reactors/steps of the soda ash production system 3. For example all heat exchangers could supply heat for both the third reactor 33 and the dense soda ash production step 39 at the same time, or some heat exchangers could provide heat for the third reactor 33 and others for the dense soda ash production step 39; combinations of these two solutions are also possible.

The present disclosure also refers to a method for flue gas treatment by carbonation-calcination loop and soda ash production by Solvay process. The method comprises extracting CaO and heat for use in the soda ash production from the flue gas treatment system.

In addition, carbon dioxide CO₂ for use in the soda ash production can be extracted from the carbonation-calcination loop.

Naturally the features described may be independently provided from one another.

In practice the materials used and the dimensions can be chosen at will according to requirements and to the state of the art.

### REFERENCE NUMBERS

- 1: arrangement of a flue gas treatment system and soda ash production system
- 2: flue gas treatment system
- 3: soda ash production system
- 5: carbonator
- 6: calciner
- 7: heat exchanger
- 8: burner
- 9: fuel source
- 10: air/oxygen source
- 11: combustion products discharge line
- 13: conditioning system
- 14: fan
- 16: first cooler
- 17: second cooler
- 18: conditioning unit
- 20: flue gas discharge line
- 30: reactor
- 31: first reactor
- 32: second reactor
- 33: third reactor
- 35: slurry preparation step
- 37: light soda ash
- 38: dense soda ash
- 39: dense soda ash production step
- 40: supply line
- 42a-f: heat exchanger
- 43: thermo fluid supply line
- 45: carbon dioxide discharge line
- 47: carbon dioxide supply branch
- FG: flue gas

## Claims

1. An arrangement (1) comprising:
a carbonation-calcination loop flue gas treatment system (2) comprising:
a carbonator (5) for receiving flue gas (FG) from a combustion process and having carbon dioxide contained in the flue gas (FG) combined with CaO to generate CaCO₃,
a calciner (6) for receiving CaCO₃ from the carbonator (5) and separating it by heat in carbon dioxide and CaO, and
a Solvay process soda ash production system (3) comprising:
at least a first reactor (31) for carrying out the reaction
NaCl + CO₂ + NH₃ + H₂O → NaHCO₃ + NH₄Cl
at least a second reactor (32) for carrying out the reaction
2NH₄Cl + CaO → 2NH₃ + CaCl₂ + H₂O
at least a third reactor (33) for carrying out the reaction
2NaHCO₃ → Na₂CO₃ + H₂O + CO₂,
Wherein the flue gas treatment system (2) and the soda ash production system (3) are configured such that CaO and heat for use in the soda ash production system (3) are both extracted from the flue gas treatment system (2).

2. The arrangement (1) of claim 1, **characterised by** further comprising
a supply line (40) for CaO between the calciner (6) and the at least one
second reactor (32), to supply the CaO from the flue gas treatment system (2) to the soda ash production system (3), and
at least a heat exchanger (42a-f) to recover heat from the flue gas treatment system (2) and supply it to the soda ash production system (3).

3. The arrangement (1) of claim 2, **characterised in that** the at least one heat exchanger (42a) is connected to a flue gas discharge line (20) of the carbonator (5).

4. The arrangement (1) of claim 1, **characterised in that** the calciner (6) is an indirect heated calciner and has a burner (8) with a combustion products discharge line (11) connected to the carbonator (5).

5. The arrangement (1) of claim 4, **characterised in that** the at least one heat exchanger (42b) is connected to the combustion products discharge line (11) of the calciner (6).

6. The arrangement of claim 4, **characterised in that** the combustion products discharge line (11) of the calciner (6) has a flue gas conditioning system (13), an auxiliary heat exchanger (42c) is connected between the flue gas discharge line (11) of the calciner (6) downstream of the conditioning system (13) and a flue gas discharge line (20) of the carbonator (5), for heating the flue gas discharged from the carbonator (5),
the heat exchanger (42d) is connected to the flue gas discharge line (20) of the carbonator (5) downstream the auxiliary heat exchanger (42c).

7. The arrangement (1) of claim 2, **characterised in that** the heat exchanger (42e) is connected to a carbon dioxide discharge line (45) from the calciner (6).

8. The arrangement (1) of claim 2, **characterised in that** the heat exchanger (42f) is connected to the supply line (40) for CaO.

9. The arrangement (1) of claim 1, **characterised in that** carbon dioxide for use in the soda ash production system (3) is extracted from the flue gas treatment system (2).

10. The arrangement (1) of claim 9,
**characterised by** further comprising a carbon dioxide supply branch (47) between the calciner (6) and the first reactor (31).

11. The arrangement (1) of claim 2, **characterised in that** the at least one thermo fluid supply line (43) is also provided between the at least one heat exchanger (42a-f) and the dense soda ash production step (39).

12. The arrangement (1) of claim 1, **characterised in that** the carbonator (5) also receives combustion products from the calciner (6).

13. A method for flue gas treatment by carbonation-calcination loop and soda ash production by Solvay process, **characterised by** extracting CaO and heat for use in the soda ash production from the flue gas treatment system.

14. The method of to claim 14, **characterised by** extracting carbon dioxide for use in the soda ash production from the carbonation-calcination loop.

## Patentansprüche

1. Anordnung (1), umfassend:
ein Rauchgasbehandlungssystem mit Karbonisierungs-Kalzinierungskreis (2), umfassend:
eine Karbonisierungsvorrichtung (5) zum Aufnehmen eines Rauchgases (FG) aus einem Verbrennungsprozess und mit einem Kohlendioxid, das in dem Rauchgas (FG) gemischt mit CaO enthalten ist, um CaCO₃ zu erzeugen,
einen Kalzinator (6) zur Aufnahme von CaCO₃ aus der Karbonisierungsvorrichtung (5) und Trennen davon durch Wärme zu Kohlendioxid und CaO, und
ein Solvay-Verfahren-Natriumcarbonat-Herstellungssystem (3), umfassend:
mindestens einen ersten Reaktor (31) zur Ausführung der Reaktion
NaCl + CO₂ + NH₃ + H₂O → NaHCO₃ + NH₄Cl
mindestens einen zweiten Reaktor (32) zur Ausführung der Reaktion
2NH₄Cl + CaO → 2NH₃ + CaCl₂ + H₂O
mindestens einen dritten Reaktor (33) zur Ausführung der Reaktion
2NaHCO₃ → Na₂CO₃ + H₂O + CO₂,
wobei das Rauchgasbehandlungssystem (2) und das Natriumcarbonat-Herstellungssystem (3) derart konfiguriert sind, dass CaO und Wärme für die Verwendung in dem Natriumcarbonat-Herstellungssystem (3) beide aus dem Rauchgasbehandlungssystem (2) extrahiert werden.

2. Anordnung (1) nach Anspruch 1, **gekennzeichnet dadurch, dass** sie ferner umfasst:
eine Zuleitung (40) für CaO zwischen dem Kalzinator (6) und dem mindestens einen zweiten Reaktor (32) zum Zuführen von CaO aus dem Rauchgasbehandlungssystem (2) zum Natriumcarbonat-Herstellungssystem (3) und
mindestens einen Wärmetauscher (42a-f) zum Wiedergewinnen von Wärme aus dem Rauchgasbehandlungssystem (2) und Zuführen davon zum Natriumcarbonat-Herstellungssystem (3).

3. Anordnung (1) nach Anspruch 2, **dadurch gekennzeichnet, dass** der mindestens eine Wärmetauscher (42a) mit einer Rauchgas-Ablassleitung (20) der Karbonisierungsvorrichtung (5) verbunden ist.

4. Anordnung (1) nach Anspruch 1, **dadurch gekennzeichnet, dass** der Kalzinator (6) ein indirekt beheizter Kalzinator ist und einen Brenner (8) mit einer Verbrennungsprodukt-Ablassleitung (11) aufweist, die mit der Karbonisierungsvorrichtung (5) verbunden ist.

5. Anordnung (1) nach Anspruch 4, **dadurch gekennzeichnet, dass** der mindestens eine Wärmetauscher (42b) mit der Verbrennungsprodukt-Ablassleitung (11) des Kalzinators (6) verbunden ist.

6. Anordnung nach Anspruch 4, **dadurch gekennzeichnet, dass** die Verbrennungsprodukt-Ablassleitung (11) des Kalzinators (6) ein Rauchgasaufbereitungssystem (13) aufweist, wobei ein Hilfswärmetauscher (42c) zwischen der Rauchgas-Ablassleitung (11) des Kalzinators (6) stromabwärts des Aufbereitungssystems (13) und einer Rauchgas-Ablassleitung (20) der Karbonisierungsvorrichtung (5) verbunden ist, um das Rauchgas, das aus der Karbonisierungsvorrichtung (5) abgegeben wird, zu erwärmen, wobei der Wärmetauscher (42d) mit der Rauchgas-Ablassleitung (20) der Karbonisierungsvorrichtung (5) stromabwärts des Hilfswärmetauschers (42c) verbunden ist.

7. Anordnung (1) nach Anspruch 2, **dadurch gekennzeichnet, dass** der Wärmetauscher (42e) mit einer Kohlendioxid-Ablassleitung (45) der Karbonisierungsvorrichtung (6) verbunden ist.

8. Anordnung (1) nach Anspruch 2, **dadurch gekennzeichnet, dass** der Wärmetauscher (42f) mit der Zuleitung (40) für CaO verbunden ist.

9. Anordnung (1) nach Anspruch 1, **dadurch gekennzeichnet, dass** das Kohlendioxid, das in dem Natriumcarbonat-Herstellungssystem (3) verwendet werden soll, aus dem Rauchgasbehandlungssystem (2) extrahiert wird.

10. Anordnung (1) nach Anspruch 9, ferner **gekennzeichnet durch** das Umfassen eines Kohlendioxid-Versorgungszweigs (47) zwischen dem Kalzinator (6) und dem ersten Reaktor (31).

11. Anordnung (1) nach Anspruch 2, **dadurch gekennzeichnet, dass** die mindestens eine Thermofluid-Zuleitung (43) auch zwischen dem mindestens einen Wärmetauscher (42a-f) und dem Dichtschritt (39) der Natriumcarbonatherstellung bereitgestellt ist.

12. Anordnung (1) nach Anspruch 1, **dadurch gekennzeichnet, dass** die Karbonisierungsvorrichtung (5) auch Verbrennungsprodukte aus dem Kalzinator (6) aufnimmt.

13. Verfahren zur Rauchgasbehandlung durch einen Karbonisierungs-Kalzinierungskreis und Natriumcarbonatherstellung durch ein Solvay-Verfahren, **gekennzeichnet durch** das Extrahieren von CaO und Wärme zur Verwendung in der Natriumcarbonatherstellung aus dem Rauchgasbehandlungssystem.

14. Verfahren nach Anspruch 14, **gekennzeichnet durch** das Extrahieren von Kohlendioxid zur Verwendung bei der Natriumcarbonatherstellung aus dem Karbonisierungs-Kalzinierungskreis.

## Revendications

1. Dispositif (1) comprenant :
un système de traitement des fumées par cycles successifs calcination/carbonatation (2) comprenant :
un carbonateur (5) destiné à recevoir les fumées (FG) provenant d'un procédé de combustion et dans lequel le dioxyde de carbone contenu dans les fumées (FG) est associé à de l'oxyde de calcium (CaO) pour générer du carbonate de calcium (CaCO₃),
un calcinateur (6) destiné à recevoir le CaCO₃ issu du carbonateur (5) et à le séparer thermiquement en dioxyde de carbone et en CaO, et
un système de production de cendre de soude selon le procédé Solvay (3) comprenant :
au moins un premier réacteur (31) pour effectuer la réaction
NaCl + CO₂ + NH₃ + H₂O → NaHCO₃ + NH₄Cl
au moins un deuxième réacteur (32) pour effectuer la réaction
2NH₄Cl + CaO → 2NH₃ + CaCl₂ + H₂O
au moins un troisième réacteur (33) pour effectuer la réaction
2NaHCO₃ → Na₂CO₃ + H₂O + CO₂ ;
dans lequel le système de traitement des fumées (2) et le système de production de cendre de soude (3) sont conçus de telle sorte que le Cao et la chaleur utilisés dans le système de production de cendre de soude (3) sont extraits du système de traitement des fumées (2).

2. Dispositif (1) selon la revendication 1, **caractérisé en ce qu'**il comprend en outre
une conduite d'alimentation (40) de CaO entre le calcinateur (6) et le au moins un deuxième réacteur (32), pour alimenter le CaO issu du système de traitement des fumées (2) vers le système de production de cendre de soude (3), et
au moins un échangeur thermique (42a-f) pour récupérer la chaleur issue du système de traitement des fumées (2) et la transmettre au système de production de cendre de soude (3).

3. Dispositif (1) selon la revendication 2, **caractérisé en ce que** le au moins un échangeur thermique (42a) est connecté à une conduite d'évacuation des fumées (20) du carbonateur (5).

4. Dispositif (1) selon la revendication 1, **caractérisé en ce que** le calcinateur (6) est un calcinateur à chaleur indirecte et possède un brûleur (8) muni d'une conduite d'évacuation des produits de combustion (11) connectée au carbonateur (5).

5. Dispositif (1) selon la revendication 4, **caractérisé en ce que** le au moins un échangeur thermique (42b) est connecté à la conduite d'évacuation des produits de combustion (11) du calcinateur (6).

6. Dispositif selon la revendication 4, **caractérisé en ce que** :
la conduite d'évacuation des produits de combustion (11) du calcinateur (6) possède un système de conditionnement des fumées (13) ;
un échangeur thermique auxiliaire (42c) est connecté entre la conduite d'évacuation des fumées (11) du calcinateur (6) en aval du système de conditionnement (13) et une conduite d'évacuation des fumées (20) du carbonateur (5), pour chauffer les fumées évacuées du carbonateur (5) ; ;
l'échangeur thermique (42d) est connecté à la conduite d'évacuation des fumées (20) du carbonateur (5) en aval de l'échangeur thermique auxiliaire (42c).

7. Dispositif (1) selon la revendication 2, **caractérisé en ce que** l'échangeur thermique (42e) est connecté à une conduite d'évacuation de dioxyde de carbone (45) du calcinateur (6).

8. Dispositif (1) selon la revendication 2, **caractérisé en ce que** l'échangeur thermique (42f) est connecté à la conduite d'alimentation (40) de CaO.

9. Dispositif (1) selon la revendication 1, **caractérisé en ce que** le dioxyde de carbone utilisé dans le système de production de cendre de soude (3) est extrait du système de traitement des fumées (2).

10. Dispositif (1) selon la revendication 9, **caractérisé en ce qu'**il comprend en outre un embranchement d'alimentation de dioxyde de carbone (47) entre le calcinateur (6) et le premier réacteur (31).

11. Dispositif (1) selon la revendication 2, **caractérisé en ce que** la au moins une conduite d'alimentation de thermo-fluide (43) est également prévue entre le au moins un échangeur thermique (42a-f) et l'étape de production de cendre dense de soude (39).

12. Dispositif (1) selon la revendication 1, **caractérisé en ce que** le carbonateur (5) reçoit également les produits de combustion issus du calcinateur (6).

13. Procédé de traitement des fumées par cycles successifs calcination/carbonatation et de production de cendre de soude selon le procédé Solvay, **caractérisé en ce que** le CaO et la chaleur utilisés dans la production de cendre de soude sont extraits du système de traitement des fumées.

14. Procédé selon la revendication 14, **caractérisé en ce que** le dioxyde de carbone utilisé dans la production de cendre de soude est extrait des cycles successifs calcination/carbonatation.
